# EUROPÄISCHE PATENTANMELDUNG

(11) **EP 4 545 832 A1**
(43) Veröffentlichungstag der Anmeldung: **30.04.2025**
(21) Anmeldenummer: 24194592.2
(22) Anmeldetag: 14.08.2024
(51) Int. Cl.: F16L 9/18, F17D 1/04, F16L 9/19, H01M 8/00

(54) **TRANSPORTLEITUNGSSYSTEM, CHEMISCHES ENERGIEUMWANDLUNGSSYSTEM UND VERWENDUNG DES TRANSPORTLEITUNGSSYSTEMS**

(30) Priorität: 25.10.2023 DE 102023129419
(71) Anmelder: Westnetz GmbH, 44139 Dortmund (DE)
(72) Erfinder: Härter, Friedhelm, 44225 Dortmund (DE)
(74) Vertreter: Bals & Vogel Patentanwälte PartGmbB

(57) **Zusammenfassung**

Die Erfindung betrifft ein Transportleitungssystem (10) zum Transport von zumindest zwei Fluiden, das Transportleitungssystem (10) umfassend eine Haupt-Transportleitung (20) zum Transport von einem ersten Fluid und zumindest eine innere Nachrüst-Transportleitung (30) zum Transport von einem zweiten Fluid, wobei die zumindest eine innere Nachrüst-Transportleitung (30) nachträglich innerhalb der Haupt-Transportleitung (20) installiert ist, wobei die zumindest eine innere Nachrüst-Transportleitung (30) zumindest abschnittsweise flexibel ausgestaltet ist und wobei die innere Nachrüst-Transportleitung (30) zumindest eine Zuführschnittstelle (32) zur Zuführung des zweiten Fluides und zumindest eine Abführschnittstelle (34) zur Abführung des zweiten Fluides umfasst. Ferner betrifft die Erfindung ein chemisches Energieumwandlungssystem (100) zur chemischen Umwandlung von Energie mit zumindest einem Transportleitungssystem (10) sowie eine Verwendung des Transportleitungssystems (10) mit einem chemischen Energieumwandlungssystem (100).

## Beschreibung

Die vorliegende Erfindung betrifft ein Transportleitungssystem zum Transport von zumindest zwei Fluiden. Ferner betrifft die Erfindung ein chemisches Energieumwandlungssystem zur chemischen Umwandlung von Energie mit zumindest einem Transportleitungssystem sowie eine Verwendung des Transportleitungssystems mit einem chemischen Energieumwandlungssystem.

Es existieren sehr große und stark verzweigte Versorgungsnetze für beispielsweise Erdgas mit entsprechenden Leitungen und/oder Erdgasleitungen. Beispielhaft versorgt ein Versorgungsnetz industrielle und private Abnehmer mit Erdgas. Die Verwendung von fossilen Brennstoffen, insbesondere Erdgas, ist vom Gesetzgeber zeitlich begrenzt worden, sodass zum einen die Versorgung mit alternativen Energiequellen und andererseits die sinnvolle Verwendung der existierenden Versorgungsnetze zu thematisieren ist.

Bekannte Versorgungsleitungen, insbesondere Erdgasleitungen, sind zumeist als Rohrleitungen zum Transport von nur einem Fluid, insbesondere Erdgas, ausgestaltet, wobei in der bekannten Praxis ausschließlich das Erdgas als beispielhafte Energiequelle zu einem Verbraucher transportiert wird und eventuell erzeugte Fluide durch den Verbraucher über anderweitige Transportmöglichkeiten oder sogar in die Umwelt abgeführt werden. Ein Transport von mehreren Fluiden und ein Transport in unterschiedliche Strömungsrichtungen wird durch bekannte Erdgasleitungen nicht unterstützt

Es ist daher Aufgabe der vorliegenden Erfindung, die oben beschriebenen Nachteile im Stand der Technik zu beheben oder zumindest teilweise zu beheben. Insbesondere ist es Aufgabe der Erfindung, ein Transportleitungssystem bereitzustellen, mit dem ein Transport von zumindest zwei Fluiden besonders einfach ermöglicht wird. Insbesondere ist es ferner die Aufgabe der Erfindung ein chemisches Energieumwandlungssystem sowie eine Verwendung des Transportleitungssystems mit einem chemischen Energieumwandlungssystem bereitzustellen.

Die voranstehende Aufgabe wird durch die Patentansprüche gelöst. Insbesondere wird die Aufgabe gelöst durch ein Transportleitungssystem zum Transport von zumindest zwei Fluiden mit den Merkmalen des unabhängigen Anspruchs 1. Ferner wird die Aufgabe gelöst durch ein chemisches Energieumwandlungssystem zur chemischen Umwandlung von Energie mit zumindest einem Transportleitungssystem mit den Merkmalen des unabhängigen Anspruchs 10 und durch eine Verwendung des Transportleitungssystems mit einem chemischen Energieumwandlungssystem mit den Merkmalen des unabhängigen Anspruchs 11. Weitere Vorteile und Details der Erfindung ergeben sich aus den Unteransprüchen, der Beschreibung und den Zeichnungen. Dabei gelten Merkmale, die im Zusammenhang mit dem erfindungsgemäßen Transportleitungssystem beschrieben sind, selbstverständlich auch im Zusammenhang mit dem erfindungsgemäßen chemischen Energieumwandlungssystem, der erfindungsgemäßen Verwendung des Transportleitungssystems und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe gelöst durch ein Transportleitungssystem zum Transport von zumindest zwei Fluiden, das Transportleitungssystem umfassend eine Haupt-Transportleitung zum Transport von einem ersten Fluid und zumindest eine innere Nachrüst-Transportleitung zum Transport von einem zweiten Fluid, wobei die zumindest eine innere Nachrüst-Transportleitung nachträglich innerhalb der Haupt-Transportleitung installiert ist, wobei die zumindest eine innere Nachrüst-Transportleitung zumindest abschnittsweise flexibel ausgestaltet ist und wobei die innere Nachrüst-Transportleitung zumindest eine Zuführschnittstelle zur Zuführung des zweiten Fluides und zumindest eine Abführschnittstelle zur Abführung des zweiten Fluides umfasst.

Das erfindungsgemäße Transportleitungssystem ist bevorzugt als Hybridpipeline zum Transport von zumindest zwei Fluiden zu verstehen. Dafür wird in eine bestehende Haupt-Transportleitung zumindest eine innere Nachrüst-Transportleitung installiert. Das Installieren der zumindest einen inneren Nachrüst-Transportleitung ist bevorzugt als Einbringen, Anordnen und/oder zumindest abschnittsweises Befestigen der inneren Nachrüst-Transportleitung in die und/oder an der bestehenden Haupt-Transportleitung zu verstehen. Bei der Installation der zumindest einen inneren Nachrüst-Transportleitung in der bestehenden Haupt-Transportleitung nimmt die zumindest eine innere Nachrüst-Transportleitung einen Teil des Querschnitts und/oder Volumens der bestehenden Haupt-Transportleitung ein, sodass der Querschnitt und/oder das Volumen der bestehenden Haupt-Transportleitung zum Transport des ersten Fluides zu Gunsten des Querschnitts und/oder des Volumens der zumindest einen inneren Nachrüst-Transportleitung reduziert wird. Mit anderen Worten wird die zumindest eine innere Nachrüst-Transportleitung in der bestehenden Haupt-Transportleitung installiert und somit ein durch die zumindest eine innere Nachrüst-Transportleitung reduzierter, verbleibender Ringraum in der bestehenden Haupt-Transportleitung erzeugt. Bevorzugt liegt die zumindest eine innere Nachrüst-Transportleitung in der bestehenden Haupt-Transportleitung und ist folglich in einem Bodenabschnitt der bestehenden Haupt-Transportleitung angeordnet.

Die zumindest eine innere Nachrüst-Transportleitung ist zumindest abschnittsweise flexibel ausgestaltet und bevorzugt als flexibler Inliner, eine flexible Metall- und/oder Kunststoffleitung. Die bestehende Haupt-Transportleitung ist bevorzugt als Versorgungsleitung von bevorzugt industriellen und/oder privaten Abnehmern und/oder Verbrauchsvorrichtungen zu verstehen.

Die zumindest eine innere Nachrüst-Transportleitung weist zumindest eine Zuführschnittstelle zur Zuführung des zweiten Fluides und zumindest eine Abführschnittstelle zur Abführung des zweiten Fluides. Die Zuführschnittstelle und/oder die Abführschnittstelle sind zur Kopplung mit mobilen und/oder stationären Versorgungsquellen und/oder Verbrauchervorrichtungen ausgestaltet, sodass eine zeitweise oder dauerhafte Versorgung und/oder Abführung der zumindest zwei Fluide ermöglicht wird. Die zumindest eine innere Nachrüst-Transportleitung ist als Punkt zu Punkt Verbindung ausgestaltet oder weist zumindest eine Abzweigung zur Verbindung von mindestens drei Schnittstellen der zumindest einen inneren Nachrüst-Transportleitung auf.

Ein besonders bevorzugtes Beispiel der Verwendung des erfindungsgemäßen Transportleitungssystems stellt der Betrieb eines Elektrolyseurs dar. Das erfindungsgemäße Transportleitungssystem ermöglicht beispielsweise den Transport von hochreinem Wasser zu dem Elektrolyseur durch die zumindest eine innere Nachrüst-Transportleitung und ferner einen Abtransport des durch den Elektrolyseur erzeugten Wasserstoffs durch die bestehende Haupt-Transportleitung.

Ein derart ausgestaltetes Transportleitungssystem ist besonders vorteilhaft, da der Transport von zumindest zwei Fluiden besonders einfach ermöglicht wird, wobei bestehende Haupt-Transportleitungen vorteilhaft und kostengünstig genutzt werden und somit in ihrem Funktionsumfang mit geringem Aufwand an Kosten, Material und/oder Zeit verändert und/oder erweitert werden.

Gemäß einer bevorzugten Weiterentwicklung der Erfindung kann bei einem Transportleitungssystem vorgesehen sein, dass die Haupt-Transportleitung einen ersten Querschnitt und die zumindest eine innere Nachrüst-Transportleitung einen zweiten Querschnitt aufweist, wobei der zweite Querschnitt mindestens 30 %, insbesondere mindestens 50 % oder mindestens 70 %, des ersten Querschnitts entspricht. Es stellt eine vorteilhafte Ausgestaltung des Transportleitungssystems dar, wenn die innere Nachrüst-Transportleitung zumindest einen Querschnitt von 30 % des Querschnitts der bestehenden Haupt-Transportleitung aufweist. Bekannte Erdgasleitungen weisen zumeist Querschnitte von 40 bis 50 cm auf. Ein derart ausgestaltetes Transportleitungssystem ist besonders vorteilhaft, da der Transport von zumindest zwei Fluiden durch die entsprechenden Querschnitte besonders einfach ermöglicht wird, wobei bestehende Haupt-Transportleitungen vorteilhaft und kostengünstig genutzt werden und somit in ihrem Funktionsumfang mit geringem Aufwand an Kosten, Material und/oder Zeit verändert und/oder erweitert werden.

Gemäß einer bevorzugten Weiterentwicklung der Erfindung kann bei einem Transportleitungssystem vorgesehen sein, dass das Transportleitungssystem zumindest eine Messvorrichtung zur Messung zumindest eines Messwerts in der Haupt-Transportleitung und/oder in der zumindest einen inneren Nachrüst-Transportleitung umfasst, insbesondere wobei die Messvorrichtung zur Messung zumindest einer der folgenden Messwerte ausgestaltet ist:
- Zusammensetzung des ersten und/oder zweiten Fluides,
- Reinheitsgrad des ersten und/oder zweiten Fluides,
- Temperatur des ersten und/oder zweiten Fluides,
- Volumenstrom des ersten und/oder zweiten Fluides,
- Druck des ersten und/oder zweiten Fluides.

Das erfindungsgemäße Transportleitungssystem ist besonders vorteilhaft, wenn zumindest ein Messwert zur Beurteilung, Auswertung und/oder Analyse des Transportleitungssystems bereitgestellt wird. Bevorzugt umfasst das Transportleitungssystem eine Logikeinheit zur Auswertung, Erfassung von Differenzen und/oder Analyse des zumindest einen gemessenen Messwerts. Bevorzugt zu messende Messwerte des Transportleitungssystems sind die Zusammensetzung der Fluide, die Reinheitsgrade der Fluide, die Temperaturen der Fluide, die Mengen und/oder Volumenströme der Fluide und/oder die Drücke der Fluide. Die Messwerte ermöglicht vorteilhaft eine Steuerung und/oder Regelung des Transportleitungssystems und/oder eine entsprechende Dokumentation der transportierten Fluide gegenüber Abnehmern und/oder dem Gesetzgeber. Die Messvorrichtung misst den zumindest einen Messwert bevorzugt dauerhaft, in gleichbleibenden oder wechselnden Intervallen, zustandsabhängig und/oder auf Grund einer maschinellen oder manuellen Anfrage. Bevorzugt umfasst die Messvorrichtung eine Daten-Speichervorrichtung zur Speicherung der Messdaten. Ein derart ausgestaltetes Transportleitungssystem ist besonders vorteilhaft, da der Transport von zumindest zwei Fluiden durch die Messvorrichtung besonders einfach nachvollziehbar und nachweisbar ermöglicht wird, wobei bestehende Haupt-Transportleitungen vorteilhaft und kostengünstig genutzt werden und somit in ihrem Funktionsumfang mit geringem Aufwand an Kosten, Material und/oder Zeit verändert und/oder erweitert werden.

Gemäß einer bevorzugten Weiterentwicklung der Erfindung kann bei einem Transportleitungssystem vorgesehen sein, dass das Transportleitungssystem zumindest eine Dichtungsvorrichtung umfasst, wobei die zumindest eine Dichtungsvorrichtung die zumindest eine innere Nachrüst-Transportleitung, insbesondere die zumindest eine Zuführschnittstelle und/oder die zumindest eine Abführschnittstelle, gegen die Haupt-Transportleitung abdichtet. Die zumindest eine Dichtungsvorrichtung ist bevorzugt als spezielle Konstruktion der Zuführschnittstelle und/oder der Abführschnittstelle, insbesondere zur Ein- und Ausspeisung von Gasen mit einer anderen Gasbeschaffenheit als Erdgas, beispielsweise Wasserstoff, zu verstehen. Die zumindest eine Dichtungsvorrichtung dient bevorzugt der fluiddichten Abdichtung der zumindest einen inneren Nachrüst-Transportleitung, insbesondere der zumindest einen Zuführschnittstelle und/oder der zumindest einen Abführschnittstelle, gegen die bestehende Haupt-Transportleitung. Die erfindungsgemäße Dichtungsvorrichtung ermöglicht bevorzugt ein nachträgliches Installieren der inneren Nachrüst-Transportleitung innerhalb der bestehenden Haupt-Transportleitung, wobei eine Abdichtung der bestehenden Haupt-Transportleitung sowie der inneren Nachrüst-Transportleitung untereinander und gegenüber der Umgebung gewährleistet wird. Die erfindungsgemäße Dichtungsvorrichtung ermöglicht bevorzugt eine Reduzierung und/oder Vermeidung von austretenden Fluiden aus der inneren Nachrüst-Transportleitung und/oder der bestehenden Haupt-Transportleitung. Ein derart ausgestaltetes Transportleitungssystem ist besonders vorteilhaft, da der Transport von zumindest zwei Fluiden durch die Dichtungsvorrichtung besonders einfach und fluiddicht ermöglicht wird, wobei bestehende Haupt-Transportleitungen vorteilhaft und kostengünstig genutzt werden und somit in ihrem Funktionsumfang mit geringem Aufwand an Kosten, Material und/oder Zeit verändert und/oder erweitert werden.

Gemäß einer bevorzugten Weiterentwicklung der Erfindung kann bei einem Transportleitungssystem vorgesehen sein, dass das Transportleitungssystem zumindest eine Regelvorrichtung umfasst, wobei die zumindest eine Regelvorrichtung zur Regelung des Drucks und/oder des Volumenstroms innerhalb der zumindest einen inneren Nachrüst-Transportleitung und/oder der Haupt-Transportleitung ausgestaltet ist. Die zumindest eine Regelvorrichtung ist bevorzugt als Stellventil, Mengenventil und/oder Druckventil ausgestaltet. Die zumindest eine Regelvorrichtung ist bevorzugt mit einer Logikeinheit des Transportleitungssystems daten- und/oder signalkommunizierend verbunden. Die zumindest eine Regelvorrichtung ist manuell, automatisiert und/oder durch eine Logikeinheit des Transportleitungssystems steuerbar. Bevorzugt ist die zumindest eine Regelvorrichtung auf Grundlage des zumindest einen gemessenen Messwerts steuerbar und/oder regelbar. Ein derart ausgestaltetes Transportleitungssystem ist besonders vorteilhaft, da der Transport von zumindest zwei Fluiden durch die Regelvorrichtung besonders einfach und regelbar ermöglicht wird, wobei bestehende Haupt-Transportleitungen vorteilhaft und kostengünstig genutzt werden und somit in ihrem Funktionsumfang mit geringem Aufwand an Kosten, Material und/oder Zeit verändert und/oder erweitert werden.

Gemäß einer bevorzugten Weiterentwicklung der Erfindung kann bei einem Transportleitungssystem vorgesehen sein, dass die Haupt-Transportleitung eine zumindest abschnittsweise unterirdisch verlegte Transportleitung, insbesondere eine Erdgastransportleitung ist. Die bestehende Haupt-Transportleitung ist bevorzugt als Erdgasleitung zu verstehen. Die bestehende Haupt-Transportleitung ist bevorzugt als Hochdruck-Transportleitung ausgestaltet und zum Transport von beispielsweise Erdgas mit 16 bar ausgestaltet. Das erfindungsgemäße Transportleitungssystem ist besonders vorteilhaft und kostengünstig, wenn bestehende Erdgastransportleitungen als Haupt-Transportleitungen verwendet werden, sodass nach Möglichkeit keine oder zumindest deutlich weniger neue Transportleitungen produziert und verlegt werden müssen. Mit anderen Worten werden somit erfindungsgemäß die bestehenden Erdgasleitungen und/oder -anlagen einschließlich der bestehenden Betriebsrechte kostenfrei oder zumindest stark vergünstigt mitgenutzt. Ein Neubau von beispielsweise Wasserstoffnetzen wird somit vorteilhaft vermieden oder zumindest auf ein Minimum reduziert. Ein derart ausgestaltetes Transportleitungssystem ist besonders vorteilhaft, da der Transport von zumindest zwei Fluiden durch die Haupt-Transportleitung besonders einfach ermöglicht wird, wobei bestehende Haupt-Transportleitungen vorteilhaft und kostengünstig genutzt werden und somit in ihrem Funktionsumfang mit geringem Aufwand an Kosten, Material und/oder Zeit verändert und/oder erweitert werden.

Gemäß einer bevorzugten Weiterentwicklung der Erfindung kann bei einem Transportleitungssystem vorgesehen sein, dass das Transportleitungssystem zumindest eine Datenschnittstelle umfasst, wobei die zumindest eine Datenschnittstelle zum Senden und/oder Empfangen von Daten, insbesondere von gemessenen Messwerten, des Transportleitungssystems ausgestaltet ist. Das Transportleitungssystem ist durch zumindest eine Datenschnittstelle vorteilhaft in seinem Funktionsumfang erweiterbar. Die zumindest eine Datenschnittstelle ermöglicht bevorzugt den Austausch von Daten und/oder Signalen zur Bereitstellung von beispielsweise gemessenen Messdaten und/oder zur Steuerung von beispielsweise der zumindest einen Regelvorrichtung des Transportleitungssystems. Durch die zumindest eine Datenschnittstelle wird bevorzugt eine Datenfernübertragung, eine Fernüberwachung des Transportleitungssystems und/oder eine Fernsteuerung des Transportleitungssystems, insbesondere der Einspeisungen des ersten und/oder zweiten Fluides, ermöglicht. Die zumindest eine Datenschnittstelle ist kabelgebunden oder kabellos ausgestaltet. Die zumindest eine Datenschnittstelle ist bevorzugt mit bekannten Datenkommunikationsvorrichtungen ausgestaltet. Ein derart ausgestaltetes Transportleitungssystem ist besonders vorteilhaft, da der Transport von zumindest zwei Fluiden durch die zumindest eine Datenschnittstelle besonders einfach, nachvollziehbar und/oder steuerbar ermöglicht wird, wobei bestehende Haupt-Transportleitungen vorteilhaft und kostengünstig genutzt werden und somit in ihrem Funktionsumfang mit geringem Aufwand an Kosten, Material und/oder Zeit verändert und/oder erweitert werden.

Gemäß einer bevorzugten Weiterentwicklung der Erfindung kann bei einem Transportleitungssystem vorgesehen sein, dass das Transportleitungssystem zumindest eine Speichervorrichtung umfasst, wobei die zumindest eine Speichervorrichtung zum Speichern von zumindest einem Fluid, Daten und/oder Energie ausgestaltet ist. Wie einleitend erklärt, weist die bestehende Haupt-Transportleitung, insbesondere ein Erdgasnetz, eine sehr große Ausdehnung und damit entsprechend große Volumen auf. Gemäß dieser Ausgestaltung der Erfindung soll das Volumen der bestehenden Haupt-Transportleitung zumindest abschnittsweise in Funktionsunion als Speichervorrichtung genutzt werden. Die Speichervorrichtung ist zur Speicherung von zumindest einem Fluid, Daten und/oder Energie ausgestaltet. Eine Speicherung von zumindest einem Fluid erfolgt beispielsweise durch eine Tankvorrichtung. Eine Speicherung von Energie erfolgt beispielsweise über Kondensatoren, Akkumulatoren und/oder Kabelvorrichtungen. Eine Speicherung von Daten erfolgt beispielsweise über bekannte Datenspeichervorrichtungen. Die zumindest eine Speichervorrichtung ist bevorzugt innerhalb der Haupt-Transportleitung und/oder der inneren Nachrüst-Transportleitung angeordnet. Ein derart ausgestaltetes Transportleitungssystem ist besonders vorteilhaft, da der Transport von zumindest zwei Fluiden sowie die Speicherung von zumindest einem Fluid, Daten und/oder Energie durch die zumindest eine Speichervorrichtung besonders einfach ermöglicht wird, wobei bestehende Haupt-Transportleitungen vorteilhaft und kostengünstig genutzt werden und somit in ihrem Funktionsumfang mit geringem Aufwand an Kosten, Material und/oder Zeit verändert und/oder erweitert werden.

Gemäß einer bevorzugten Weiterentwicklung der Erfindung kann bei einem Transportleitungssystem vorgesehen sein, dass das Transportleitungssystem zumindest eine Positionsvorrichtung umfasst, wobei die zumindest eine Positionsvorrichtung zur zumindest abschnittsweisen Positionierung der zumindest einen inneren Nachrüst-Transportleitung innerhalb der Haupt-Transportleitung ausgestaltet ist. Wie voranstehend beschrieben liegt die zumindest eine innere Nachrüst-Transportleitung zumindest abschnittsweise bevorzugt in der bestehenden Haupt-Transportleitung und ist folglich bevorzugt in einem Bodenabschnitt der bestehenden Haupt-Transportleitung angeordnet. Alternativ oder zusätzlich umfasst das Transportleitungssystem zumindest eine Positionsvorrichtung zur zumindest abschnittsweisen Positionierung der zumindest einen inneren Nachrüst-Transportleitung innerhalb der Haupt-Transportleitung. Die zumindest eine Positionsvorrichtung ermöglicht eine Positionssicherung der zumindest einen inneren Nachrüst-Transportleitung und/oder eine definierte Anordnung der inneren Nachrüst-Transportleitung innerhalb der Haupt-Transportleitung. Die zumindest eine Positionsvorrichtung ist beispielsweise als Stützvorrichtung, Kissenvorrichtung, Abstandshaltervorrichtung und/oder Gerüstvorrichtung ausgestaltet. Beispielsweise ermöglicht die zumindest eine Positionsvorrichtung eine Anordnung und/oder zumindest abschnittsweise Führung, Abzweigung und/oder Kreuzung von mehreren inneren Nachrüst-Transportleitungen zueinander und/oder innerhalb der Haupt-Transportleitung. Ein derart ausgestaltetes Transportleitungssystem ist besonders vorteilhaft, da der Transport von zumindest zwei Fluiden durch die zumindest eine Positionsvorrichtung besonders einfach ermöglicht wird, wobei bestehende Haupt-Transportleitungen vorteilhaft und kostengünstig genutzt werden und somit in ihrem Funktionsumfang mit geringem Aufwand an Kosten, Material und/oder Zeit verändert und/oder erweitert werden.

Gemäß einem zweiten Aspekt der Erfindung wird die Aufgabe durch ein chemisches Energieumwandlungssystem zur chemischen Umwandlung von Energie mit zumindest einem Transportleitungssystem gemäß dem ersten Aspekt gelöst. Bei dem beschriebenen chemischen Energieumwandlungssystem ergeben sich sämtliche Vorteile, die bereits zu dem Transportleitungssystem gemäß dem ersten Aspekt der Erfindung beschrieben worden sind. Das chemische Energieumwandlungssystem zur chemischen Umwandlung von Energie ist mit dem Transportleitungssystem, insbesondere über die zumindest eine Zuführschnittstelle und/oder die zumindest eine Abführschnittstelle fluidkommunizierend verbunden. Das chemische Energieumwandlungssystem ist über das Transportleitungssystem mit Fluiden versorgbar und/oder speist Fluide in das Transportleitungssystem ein. Das chemische Energieumwandlungssystem zur chemischen Umwandlung von Energie ist bevorzugt als Brennstoffzellensystem und/oder als Elektrolyseur zu verstehen. Ein besonders bevorzugtes Beispiel der Verwendung des erfindungsgemäßen Transportleitungssystems stellt der Betrieb eines Elektrolyseurs dar. Das erfindungsgemäße Transportleitungssystem ermöglicht beispielsweise den Transport von hochreinem Wasser zu dem Elektrolyseur durch die zumindest eine innere Nachrüst-Transportleitung und ferner einen Abtransport des durch den Elektrolyseur erzeugten Wasserstoffs durch die bestehende Haupt-Transportleitung.

Ein derart ausgestaltetes chemisches Energieumwandlungssystem ist besonders vorteilhaft, da der Transport von zumindest zwei Fluiden durch das Transportleitungssystem besonders einfach ermöglicht wird, wobei bestehende Haupt-Transportleitungen vorteilhaft und kostengünstig genutzt werden und somit in ihrem Funktionsumfang mit geringem Aufwand an Kosten, Material und/oder Zeit verändert und/oder erweitert werden.

Gemäß einem dritten Aspekt der Erfindung wird die Aufgabe durch eine Verwendung des Transportleitungssystems gemäß dem ersten Aspekt mit einem chemischen Energieumwandlungssystem zur chemischen Umwandlung von Energie gemäß dem zweiten Aspekt gelöst. Bei der beschriebenen Verwendung ergeben sich sämtliche Vorteile, die bereits zu dem Transportleitungssystem gemäß dem ersten Aspekt der Erfindung und zu dem chemischen Energieumwandlungssystem gemäß dem zweiten Aspekt der Erfindung beschrieben worden sind.

Ein erfindungsgemäßes Transportleitungssystem, ein chemisches Energieumwandlungssystem sowie eine erfindungsgemäße Verwendung werden nachfolgend anhand von Zeichnungen näher erläutert. Es zeigen jeweils schematisch:
- Figur 1: in einer perspektivischen Ansicht ein Transportleitungssystem und ein chemisches Energieumwandlungssystem, und
- Figur 2: in einer perspektivischen Draufsicht ein Transportleitungssystem.

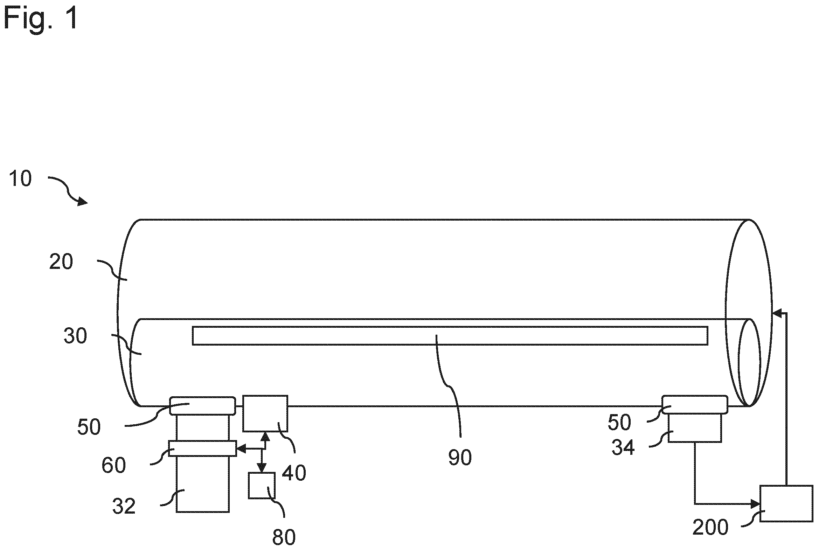

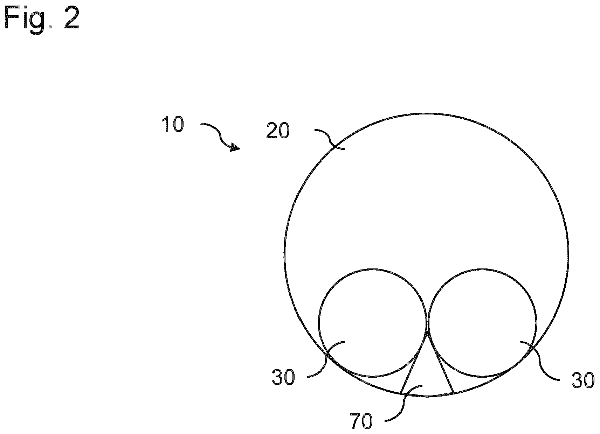

Elemente mit gleicher Funktion und Wirkungsweise sind in den Fig. 1 und 2 jeweils mit denselben Bezugszeichen versehen.

In Fig. 1 ist schematisch in einer perspektivischen Ansicht ein Transportleitungssystem 10 und ein chemisches Energieumwandlungssystem 100 gezeigt. Das Transportleitungssystem ist 10 zum Transport von zwei Fluiden ausgestaltet. Das Transportleitungssystem 10 umfasst eine Haupt-Transportleitung 20 zum Transport von einem ersten Fluid, hier einem Transport von dem chemischen Energieumwandlungssystem 100, und eine innere Nachrüst-Transportleitung 30 zum Transport von einem zweiten Fluid, hier einem Transport zu dem chemischen Energieumwandlungssystem 100. Die innere Nachrüst-Transportleitung 30 ist nachträglich innerhalb der Haupt-Transportleitung 20 installiert worden. Die innere Nachrüst-Transportleitung 30 ist flexibel ausgestaltet und weist eine Zuführschnittstelle 32 zur Zuführung des zweiten Fluides und zumindest eine Abführschnittstelle 34 zur Abführung des zweiten Fluides an das chemischen Energieumwandlungssystem 100 auf. Die Haupt-Transportleitung 20 ist eine abschnittsweise unterirdisch verlegte Erdgastransportleitung. Das chemische Energieumwandlungssystem 100 ist als Elektrolyseur ausgestaltet. Die Haupt-Transportleitung 20 weist einen ersten Querschnitt und die innere Nachrüst-Transportleitung 30 einen zweiten Querschnitt auf, wobei der zweite Querschnitt 50 % des ersten Querschnitts entspricht. Das Transportleitungssystem 10 umfasst eine Messvorrichtung 40 zur Messung von mehreren Messwerten in der Haupt-Transportleitung 20 und in der inneren Nachrüst-Transportleitung 30. Das Transportleitungssystem 10 umfasst zwei Dichtungsvorrichtungen 50, wobei die zwei Dichtungsvorrichtungen 50 die innere Nachrüst-Transportleitung 30, hier die Zuführschnittstelle 32 und die Abführschnittstelle 34, gegen die Haupt-Transportleitung 20 und die Umgebung abdichten. Das Transportleitungssystem 10 umfasst eine Regelvorrichtung 60, wobei die Regelvorrichtung 60 zur Regelung des Drucks und des Volumenstroms innerhalb der inneren Nachrüst-Transportleitung 30 ausgestaltet ist. Das Transportleitungssystem 10 umfasst eine Datenschnittstelle 80, wobei die Datenschnittstelle 80 zum Senden und Empfangen von Daten und Signalen, hier Senden von gemessenen Messwerten und Empfangen von Regelsignalen für die Regelvorrichtung 60, des Transportleitungssystems 10 ausgestaltet ist. Das Transportleitungssystem 10 umfasst eine Speichervorrichtung 90, wobei die Speichervorrichtung 90 zum Speichern von Daten ausgestaltet ist.

In Fig. 2 ist schematisch in einer perspektivischen Draufsicht ein Transportleitungssystem 10 gezeigt. Das Transportleitungssystem ist 10 zum Transport von drei Fluiden ausgestaltet. Das Transportleitungssystem 10 umfasst eine Haupt-Transportleitung 20 zum Transport von einem ersten Fluid und zwei innere Nachrüst-Transportleitungen 30 zum Transport von einem zweiten sowie einem dritten Fluid. Die innere Nachrüst-Transportleitungen 30 sind nachträglich innerhalb der Haupt-Transportleitung 20 installiert worden. Die innere Nachrüst-Transportleitungen 30 sind flexibel ausgestaltet. Das Transportleitungssystem 10 umfasst eine Positionsvorrichtung 70, wobei die Positionsvorrichtung 70 zur Positionierung der zwei inneren Nachrüst-Transportleitungen 30 innerhalb der Haupt-Transportleitung 20 ausgestaltet ist.

### Bezuaszeichenliste

- 10: Transportleitungssystem
- 20: Haupt-Transportleitung
- 30: innere Nachrüst-Transportleitung
- 32: Zuführschnittstelle
- 34: Abführschnittstelle
- 40: Messvorrichtung
- 50: Dichtungsvorrichtung
- 60: Regelvorrichtung
- 70: Positionsvorrichtung
- 80: Datenschnittstelle
- 90: Speichervorrichtung
- 100: Chemisches Energieumwandlungssystem

## Patentansprüche

1. Transportleitungssystem (10) zum Transport von zumindest zwei Fluiden, das Transportleitungssystem (10) umfassend eine Haupt-Transportleitung (20) zum Transport von einem ersten Fluid und zumindest eine innere Nachrüst-Transportleitung (30) zum Transport von einem zweiten Fluid, wobei die zumindest eine innere Nachrüst-Transportleitung (30) nachträglich innerhalb der Haupt-Transportleitung (20) installiert ist, wobei die zumindest eine innere Nachrüst-Transportleitung (30) zumindest abschnittsweise flexibel ausgestaltet ist und wobei die innere Nachrüst-Transportleitung (30) zumindest eine Zuführschnittstelle (32) zur Zuführung des zweiten Fluides und zumindest eine Abführschnittstelle (34) zur Abführung des zweiten Fluides umfasst.

2. Transportleitungssystem (10) nach Anspruch 1,
**dadurch gekennzeichnet,**
**dass** die Haupt-Transportleitung (20) einen ersten Querschnitt und die zumindest eine innere Nachrüst-Transportleitung (30) einen zweiten Querschnitt aufweist, wobei der zweite Querschnitt mindestens 30 %, insbesondere mindestens 50 % oder mindestens 70 %, des ersten Querschnitts entspricht.

3. Transportleitungssystem (10) nach einem der vorangehenden Ansprüche,
**dadurch gekennzeichnet,**
**dass** das Transportleitungssystem (10) zumindest eine Messvorrichtung (40) zur Messung zumindest eines Messwerts in der Haupt-Transportleitung (20) und/oder in der zumindest einen inneren Nachrüst-Transportleitung (30) umfasst, insbesondere wobei die Messvorrichtung (40) zur Messung zumindest einer der folgenden Messwerte ausgestaltet ist:
- Zusammensetzung des ersten und/oder zweiten Fluides,
- Reinheitsgrad des ersten und/oder zweiten Fluides,
- Temperatur des ersten und/oder zweiten Fluides,
- Volumenstrom des ersten und/oder zweiten Fluides,
- Druck des ersten und/oder zweiten Fluides.

4. Transportleitungssystem (10) nach einem der vorangehenden Ansprüche,
**dadurch gekennzeichnet,**
**dass** das Transportleitungssystem (10) zumindest eine Dichtungsvorrichtung (50) umfasst, wobei die zumindest eine Dichtungsvorrichtung (50) die zumindest eine innere Nachrüst-Transportleitung (30), insbesondere die zumindest eine Zuführschnittstelle (32) und/oder die zumindest eine Abführschnittstelle (34), gegen die Haupt-Transportleitung (20) abdichtet.

5. Transportleitungssystem (10) nach einem der vorangehenden Ansprüche,
**dadurch gekennzeichnet,**
**dass** das Transportleitungssystem (10) zumindest eine Regelvorrichtung (60) umfasst, wobei die zumindest eine Regelvorrichtung (60) zur Regelung des Drucks und/oder des Volumenstroms innerhalb der zumindest einen inneren Nachrüst-Transportleitung (30) und/oder der Haupt-Transportleitung (20) ausgestaltet ist.

6. Transportleitungssystem (10) nach einem der vorangehenden Ansprüche,
**dadurch gekennzeichnet,**
**dass** die Haupt-Transportleitung (20) eine zumindest abschnittsweise unterirdisch verlegte Transportleitung, insbesondere eine Erdgastransportleitung ist.

7. Transportleitungssystem (10) nach einem der vorangehenden Ansprüche,
**dadurch gekennzeichnet,**
**dass** das Transportleitungssystem (10) zumindest eine Datenschnittstelle (80) umfasst, wobei die zumindest eine Datenschnittstelle (80) zum Senden und/oder Empfangen von Daten, insbesondere von gemessenen Messwerten, des Transportleitungssystems (10) ausgestaltet ist.

8. Transportleitungssystem (10) nach einem der vorangehenden Ansprüche,
**dadurch gekennzeichnet,**
**dass** das Transportleitungssystem (10) zumindest eine Speichervorrichtung (90) umfasst, wobei die zumindest eine Speichervorrichtung (90) zum Speichern von zumindest einem Fluid, Daten und/oder Energie ausgestaltet ist.

9. Transportleitungssystem (10) nach einem der vorangehenden Ansprüche,
**dadurch gekennzeichnet,**
**dass** das Transportleitungssystem (10) zumindest eine Positionsvorrichtung (70) umfasst, wobei die zumindest eine Positionsvorrichtung (70) zur zumindest abschnittsweisen Positionierung der zumindest einen inneren Nachrüst-Transportleitung (30) innerhalb der Haupt-Transportleitung (20) ausgestaltet ist.

10. Chemisches Energieumwandlungssystem (100) zur chemischen Umwandlung von Energie mit zumindest einem Transportleitungssystem (10),
**dadurch gekennzeichnet,**
**dass** das zumindest eine Transportleitungssystem (10) gemäß einem der vorangegangenen Ansprüche ausgestaltet ist.

11. Verwendung des Transportleitungssystems (10) nach einem der vorangehenden Ansprüche 1 bis 9 mit einem chemischen Energieumwandlungssystem (100), insbesondere wobei hochreines Wasser durch die zumindest eine innere Nachrüst-Transportleitung (30) zum chemischen Energieumwandlungssystems (100) und Wasserstoff durch die Haupt-Transportleitung (20) von dem chemischen Energieumwandlungssystem (100) transportiert wird oder transportierbar ist.
